(19)

**Europäisches Patentamt**
**European Patent Office**
**Office européen des brevets**

(11) **EP 4 016 504 A1**

(12) **EUROPEAN PATENT APPLICATION**

(43) Date of publication:
**22.06.2022 Bulletin 2022/25**

(21) Application number: **20214225.3**

(22) Date of filing: **15.12.2020**

(51) International Patent Classification (IPC):
**G08G 5/04** *(2006.01)* **G08G 5/00** *(2006.01)*
**G01S 13/93** *(2020.01)* **G01S 13/933** *(2020.01)*

(52) Cooperative Patent Classification (CPC):
**G01S 17/933; G01S 13/878; G01S 13/933;**
**G01S 17/87; G08G 5/0026; G08G 5/0082;**
**G08G 5/045**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **OKAPI:Orbits GmbH**
**38108 Braunschweig (DE)**

(72) Inventor: **Kebschull, Christopher**
**38108 Braunschweig (DE)**

(74) Representative: **Richter, Thomas Kurt Reinhold**
**Bauschweg 22**
**80999 München (DE)**

(54) **METHOD, COMPUTER PROGRAM AND HARDWARE FOR DETERMINING A COLLISION PROBABILITY**

(57) The invention relates to a method for determining a collision probability of at least two space objects each detected by a space surveillance sensor system, the method comprising the steps of:
- providing of values of collision probability parameters of a first space object detected by a first space surveillance sensor system and values of collision probability parameters of a second space object detected by a second space surveillance sensor system, whereby said collision probability parameters are suitable to determine a collision probability between said first space object and said second space object,
- providing a system behavior knowledge database, whereby the system behavior knowledge database supplies for each space surveillance sensor system a system behavior quality in relation to at least one object property of space objects;
- ascertaining at least one object property of the detected first space object and, for the first space surveillance sensor system, determine a system behavior quality from the system behavior knowledge database using the at least one ascertained object property of the detected first space object; and/or
- ascertaining at least one object property of the detected second space object and, for the second space surveillance sensor system, determine a system behavior quality from the system behavior knowledge database using the at least one ascertained object property of the detected second space object;
- determining at least one collision probability of the first space object and the second space object depending on the provided values of collision probability parameters of the first space object, the provided values of collision probability parameters of the second space object and the determined system behavior quality for the corresponding space surveillance sensor system.

Figur 2

**Description**

The present invention relates to a method for determining a collision probability of at least two space objects each detected by a space surveillance sensor system. The present invention relates also to a computer program and a hardware thereto.

During satellite operation in space, close approaches (conjunctions) between a satellite and one or more other space objects (e.g. another satellite) are observed and warnings with estimates of collision risk are issued. Thus collision risk includes a collision probability, which defines the probability of a collision between the two observed space objects respectively satellites.

A classic risk estimation process for close approach forecasts of space objects uses relevant parameters, which are detected by sensors of a space surveillance system. A space surveillance system detects, tracks, catalogs and identifies artificial space objects orbiting the Earth. Thus artificial space objects detected by a space surveillance system could be for example active/inactive satellites, spent rocket bodies, or fragmentation debris. A space surveillance system includes active or passive sensors like radars, telescopes, lasers and the necessary processing systems, which drive space object catalogue. This involves processes like object measurement-correlations, orbit determination, cataloguing and scheduling the connected sensors. For example, a risk estimation may be performed 7 days ahead of the time of closest approach (TCA) of two objects. Every observation of the objects until TCA will reduce the uncertainties and improve the risk estimation.

A risk estimation algorithm estimates the collision probability based on the available information from the space surveillance sensor system. A collision probability could be at least one value to describe a collision risk between two or more observed objects. Thus, the collision probability could be calculated using the combined object radius R of both space objects (collision partners), the miss distance of both collision partners and the combined uncertainty C in the position data of both collision partners, known at the time of estimation (e.g. Foster, J.L., and Estes, H.S., "A Parametric Analysis of Orbital Debris Collision Probability and Maneuver Rate for Space Vehicles." NASA (JSC-25898. Houston, Texas, NASA Johnson Space Flight Center, August 1992).

The uncertainty of a space object can be described as the standard deviation in all position components, assuming a normal distribution. For the computation of a collision probability, the uncertainties of both space objects (e.g. both satellites) are combined and reduced to a 2D representation (the so-called b-plane).

A classic collision probability estimation process uses parameters supplied by the space surveillance sensor system. It uses sensors and mathematical models to run (routinely) tasks that create and maintain a list of close approach events including their relevant parameters. The parameters are filtered in the process to exclude events with corrupt or irrelevant data. In the adaption step the parameters are complemented with additional information available from other sources, e.g. the satellite operator who knows better the shape and dimension, as well as position and velocity of his observed satellites. In the final step, the collision probability estimation is performed for the time of the event (TCA).

US 2007/0032984 A1 discloses a method for calculating a maximum conjunction probability by addressing rectangular object shapes, even though their orientation may not be known. Object dimensions and relative miss distance, coupled with the aspect ratio of the projected combined covariance, are used to determine the size and orientation of the covariance as well as the object orientation that produces the maximum probability. In treating the objects as rectangles instead of spheres, the probability calculation becomes more realistic by accounting for object shape. In the absence of object attitude information, a footprint is created that completely defines the region where the two objects might touch. This footprint can then be rotated to determine the orientation that produces the largest probability, making it the most conservative estimate for the given conjunction conditions. Sufficiency of the positional data is accessed to meaningfully support the calculations by using the associated standard deviation to demarcate a probability dilution region.

US 8,909,586 B2 discloses a method for characterizing the uncertainty of the orbital state of an Earth-orbiting space object hereof using a Gauss von Mises probability density function defined on the n+1 dimensional cylindrical manifold nx. It is additionally described to transform a Gauss von Mises distribution under a diffeomorphism and approximating the output as a Gauss von Mises distribution. Embodiments can also include fusing a prior state represented by a Gauss von Mises distribution with an update report, wherein the update can be either another Gauss von Mises distribution of the same dimension as the prior or an observation related to the prior by a stochastic measurement model. A Gauss von Mises distribution can be calculated from a plurality of reports, wherein the reports are either Gauss von Mises distributions or observations related to the state space by a stochastic measurement model.

US 10,551,994 discloses systems, methods and devices for a three dimensional tool for depicting the variability of probability of collision (Pc) inputs to Pc estimates. The depictions generated by the various embodiments may be used to quantify the quality of Pc input data required to yield actionable Pc estimates. Various embodiments may provide tools for depicting Pc validation results. Various embodiments may provide a GUI for a computing device that may depict Pc validation results.

EP 2 937 798 A1 relates to a conjunction summary message (CSM)-based analysis system for a collision that includes space debris which moves in space, a user satellite which is operated by a user, a joint space operations center server which receives information collected through a space debris monitoring satellite and radar or an optical camera and calculates orbit information and covariance information about the user satellite and the space debris, and a collision risk analysis server which analyzes a collision risk between the satellite and the space debris based on the orbit information and the covariance information calculated by the joint space operations center server, thereby having effects on improving precise prediction of collision between the satellite and the space debris based on a CSM informing the collision risk between the satellite and the space debris while operating a global space monitoring network, and significantly reducing a total time taken in determining and analyzing a precise orbit of the space debris and making an optimized collision-avoidance maneuver plan, through the effective user interface and system.

EP 3 633 528 A1 discloses a method for predicting collisions and conflicts between multiple moving bodies, comprising the steps of creating objects by modeling the shape of each of multiple moving bodies; creating two-dimensional circles by modeling the objects by using size information of the objects; modeling the two-dimensional circles into moving disks by using at least one of the moving speeds of the moving bodies, the monitoring time window for the moving bodies, and the size information of the two-dimensional circles; computing a Voronoi diagram between the moving disks and calculating edges of the Voronoi diagram; and during the monitoring time window for the moving bodies, calculating a flipping event in which at least one of the edges of the Voronoi diagram is converted into a vertex and then converted into another edge, and a collision event by which a collision between a pair of moving disks defining an edge of the Voronoi diagram is predicted, and calculating whether actual collisions occur between moving disks triggering the flipping event and between moving disks triggering the collision event, in chronological order of the occurrence of the flipping event and the collision event.

The methods produce statistical collision probabilities, which are routinely updated. They do not reflect the variability in the estimation of future updates, where the uncertainty is reduces as the time advances to the TCA. The collision probability can change significantly over the time toward the TCA, as the parameters (e.g. miss distance and uncertainties) used in the methods are updated by the space surveillance sensor system.

However, satellite operators and/or owners would like to know as early as possible what to expect, where the collision probability is going to end up (e.g. does the collision probability increase over time or does it decrease?). An early acknowledge of the collision probability respectively collision probability trend enables early decisions for satellite operators to perform avoidance maneuver. The early decision capability reduces the maneuver cost when mitigating the collision risk, through an increased decision horizon. That will result in a longer lifetime of the satellite, because the earlier the maneuver is performed, the less correction is necessary.

Therefore, it is an aspect of the present invention to avoid late correction maneuvers by satellites based on a collision risk. It is a further aspect of the present invention to enable early decisions for satellite operates if there is a collision probability.

According to claim 1 a method for determining a collision probability of at least two space objects is proposed. At least both space objects (which one could be a satellite or both) are detected and observed by a space surveillance sensor system of a space surveillance system, space surveillance network or space situational awareness system. The inventive method comprising the steps of:

- providing of values of collision probability parameters of a first space object detected by a first space surveillance sensor system and values of collision probability parameters of a second space object detected by a second space surveillance sensor system, whereby said collision probability parameters are suitable to determine a collision probability between said first space object and said second space object,
- providing a system behavior knowledge database, whereby the system behavior knowledge database supplies for each space surveillance sensor system a system behavior quality in relation to at least one object property of space objects;
- ascertaining at least one object property of the detected first space object and, for the first space surveillance sensor system, determine a system behavior quality from the system behavior knowledge database using the at least one ascertained object property of the detected first space object; and/or
- ascertaining at least one object property of the detected second space object and, for the second space surveillance sensor system, determine a system behavior quality from the system behavior knowledge database using the at least one ascertained object property of the detected second space object;
- determining at least one collision probability of the first space object and the second space object depending on the provided values of collision probability parameters of the first space object, the provided values of collision probability parameters of the second space object and the determined system behavior quality for the corresponding space surveillance sensor system.

In the proposed method, values of collision probability parameters of a first space object are provided. These values of collision probability parameters of the first space object are recorded by a first space surveillance sensor system. For each collision probability parameter, at least one value is recorded and provided. Further, for the second space object, values of collision probability parameters of the second space object are also provided. These values of collision probability parameters of the second space object are recorded by a second space surveillance sensor system. The first and the second space surveillance sensor system could be the same space surveillance sensor system or could be different systems. At the time, when the values of collision probability parameters of the first space object and the second space object exist, a risk estimation could be calculated. For the first time, this time is long before the TCA. The collision parameters are suitable to determine a collision probability between the first and the second space object and could be parameters from a classic risk estimation process established in the state of the art.

Further, a system behavior knowledge database is provided (e.g. as a detection behavior knowledge database). The system behavior knowledge database has learned for each space surveillance sensor system a correlation between at least one object property of the observed space objects and the correlating system behavior quality. The system behavior quality indicates how accurately the space surveillance sensor system can detect the respective object with the corresponding object property and/or how accurately the space surveillance sensor system can process the data to determine the collision probability (e.g. how accurate are the underlying data models). The system behavior knowledge database includes a system behavior (e.g. a detection behavior) of the underlying space surveillance sensor system with respect to the corresponding object property of the observed space object. The correlation could consider the special sensor type underlying the corresponding space surveillance sensor system.

Both, the values of the collision probability parameters of the first and the at least one second space object as well as the system behavior knowledge database are provided to a computer, more precisely to a calculation unit (CPU + Memory) of the computer.

In the next step, at least one object property of the detected first and/or second space object are ascertained. Ascertaining the at least one object property means at least identifying and/or detecting the object property, e.g. from the detected values of the parameters measured by observing the corresponding space object with the space surveillance sensor system.

Such object properties of the space objects could be, for example, the object type (satellite, rocket bodies, debris, etc.), the object form, the dimensions of the object, the altitude of the object, the attitude of the object, the orbit of the object, the velocity of the object, etc.

The object properties are ascertained for the first space object and/or the second space object. If at least one object property for the first space object is ascertained, a system behavior quality from the system behavior knowledge database is determined using the at least one ascertained object property to describe the system behavior (e.g. detection behavior) of the first space surveillance sensor system observing the first space object. If at least one object property for the second space object is ascertained, a system behavior quality from the system behavior knowledge database is determined using the at least one ascertained object property of the second space object to describe the system behavior (e.g. detection behavior) of the second space surveillance sensor system observing the second space object. The system behavior quality could include a detection quality of the underlying sensor system and/or a processing quality of the underlying calculation model.

Finally, at least one collision probability (collision probability value and/or collision probability trend) could be calculated by the computer using the provided values of collision parameters of both space objects as well as the determined system behavior quality (e.g. detection quality) of the corresponding space surveillance sensor system.

The proposed method solves the problem by supplying a system behavior quality from a system behavior knowledge database to a classic risk estimation process. Therefore, a more precise collision probability (a collision probability value or a collision probability trend) could be present long before the actual TCA (e.g. at the time of the first observation) in contrast to a statistic collision probability value from a classic risk estimation process.

The inventors have recognized that some of the used parameters for determining a collision probability have a bigger influence on the collision probability value than others. E.g. the uncertainties in the position of both space objects involved in the close approach have a bigger impact than less varying values of the miss distance or the object dimension.

Based on well-known space surveillance sensor systems and available collision parameter sets, which are created during the routinely operations analyses are performed deriving statistics and patterns that can be learned and compiled into behavior parameters, describing at minimum the qualitative trend in the collision probability parameters.

While the radius and miss distance stay constant over time, the uncertainty of the position vector is reduced until TCA, as the space surveillance sensor system observes and tracks the objects routinely and improves its knowledge of the object. The knowledge on how good the space surveillance sensor system performs at updating the position and velocity vector can be used for deriving a better collision probability.

In an embodiment, the system behavior quality supplied by the system behavior knowledge database is a set of at least one behavior parameter describing at minimum a qualitative trend in the detected collision probability parameters.

In an embodiment, the first space surveillance sensor systems and the second space surveillance sensor system are different space surveillance sensor systems or the same space surveillance sensor system.

In an embodiment, a first collision probability is determined in relation to a detecting time, on which the values of collision probability parameters of the first and/or second space object were detected, and at least one second collision probability is determined in relation to a an intermediate time, which is between the detecting time and the time of closest approach of both space objects.

In an embodiment, for each expected further detecting time as an intermediate time, a second collision probability is determined.

At a calculating time, the collision probability is determined in relation to the detecting time, on which the values of collision probability parameters of the first and/or second space object were detected. Further at the calculating time (e.g. the first detecting time), a collision probability is calculated for expected further observation times, on which the first and/or second space object will be reobserved or redetected by the space surveillance sensor system before TCA is achieved.

The collision probability calculated by the proposed method at said calculating time, will include a collision probability value in relation to the detecting time and will include further a collision probability value for each expected reobservation or redetecting time in the future until TCA is achieved. This is repeated again, if the first and/or second space object will be redetected by the space surveillance sensor system. Therefore, a collision probability trend at said calculating time could be specified.

In an embodiment, the system behavior knowledge database is based on machine learning. In this embodiment, the system behavior knowledge database could be a code book or a pattern list to describe the correlation.

In an embodiment, the system behavior knowledge database is based on an artificial intelligence, especially based on an artificial neural network. The correlation is learned in an artificial neural network.

In an embodiment, the collision probability parameters are a space object state vector of the corresponding space object, space object shape and dimensions of the corresponding space object and/or space object uncertainty of the corresponding space object.

In an embodiment, the space object state vector of the corresponding space object includes at least one of the followings:

- position of the corresponding space object;
- velocity of the corresponding space object;
- ballistic coefficient of the corresponding space object;
- drag coefficient of the corresponding space object;
- drag coefficient over mass of the corresponding space object;
- reflectivity coefficient of the corresponding space object;
- reflectivity coefficient over mass of the corresponding space object.

In an embodiment, the space object shape and dimensions of the corresponding space object includes a reference diameter or reference radius of an assumed spherical body of the corresponding space object.

In an embodiment, the space object uncertainty of the corresponding space object is expressed as standard deviations or variances for at least one of the followings:

- position of the corresponding space object;
- velocity of the corresponding space object;
- ballistic coefficient of the corresponding space object;
- drag coefficient of the corresponding space object;
- drag coefficient over mass of the corresponding space object;
- reflectivity coefficient of the corresponding space object;
- reflectivity coefficient over mass of the corresponding space object.

In an embodiment, the system behavior quality from the system behavior knowledge database is based on at least one of the followings:

- achievable quality of detecting the space object state vector of the corresponding space object expressed as the covariance close to the time of closest approach;
- a revisit frequency of the corresponding space object by the corresponding space surveillance sensor system;
- an orbit extrapolation capabilities of the corresponding space surveillance sensor system.

Further, the problem is solved with a computer program according to claim 13 arranged to execute the method as described above, if the computer program is running on a computer.

Furthermore, the problem is also solved with a hardware device according to claim 14 arrange to execute the method as described above.

The invention is explained in more detail using the attached figures.

Figure 1    schematic representation of two satellites in close approach;
Figure 2    schematic representation of a space surveillance system;
Figure 3    schematic representation of uncertainties of space objects;
Figure 4    diagram of the method flow.

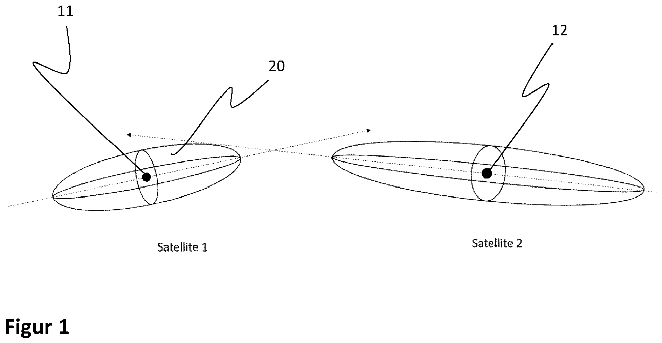

Figure 1 shows a schematic representation of two satellites 11 und 12 in close approach. Both satellite positions and velocities have associated uncertainties 20 from measurements by sensors and processing through imperfect modelling of the orbital mechanics and space environment.

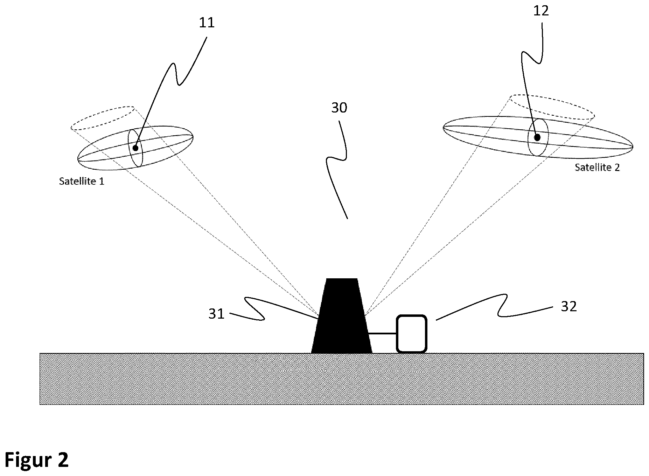

Figure 2 shows a schematic representation of a space surveillance system 30 for observing space objects 11 und 12. The space surveillance system 30 has at least a space surveillance sensor system 31 having one or more sensors for observing space objects 11, 12. These sensors could be passive or active sensors, e.g. radar, laser, telescope, etc. Further, the space surveillance system 30 has at least one computer 32 to process the observed data. The computer 32 is arranged to execute one or more computer programs calculating a collision probability based on the detected data.

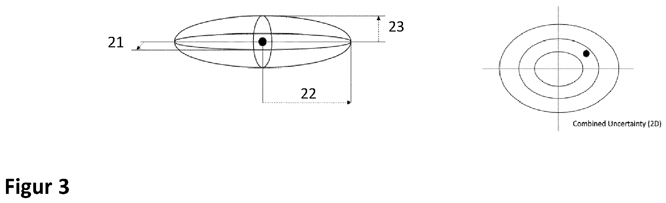

Figure 3 shows a schematic representation of a space object 10 with explained uncertainties around the space object 10. There are a tangential uncertainty 21, a long-track uncertainty 22 and a radial uncertainty 23.

The uncertainty of the object 10 can be described as the standard deviation in all spatial directions (tangential, long-track and radial), assuming a normal distribution. For the computation of the collision probability, the uncertainties 21, 22, 23 of both objects are combined and reduced to a 2D representation (the so-called b-plane, showing on the right side of Figure 3).

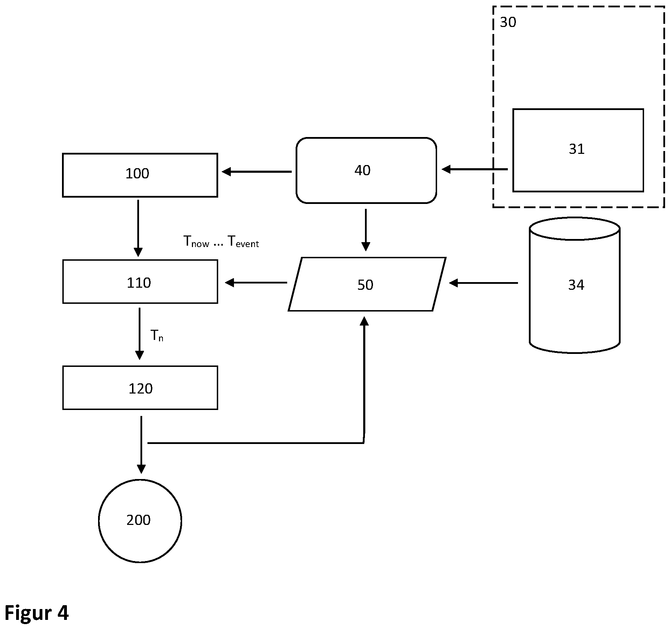

A flow diagram of the inventive method is shown in Figure 4. The space surveillance sensor system 31 is providing a set of values of collision probability parameters 40 of the observed first space object 11 and second space object 12. Further, the behavior parameters respectively the system behavior quality 50 of the corresponding space sensor surveillance system 31 is ascertained based on one or more collision parameters 40 using a provided system behavior knowledge database 34.

In the first step 100, the parameters 40 are filtered to exclude events with corrupt or irrelevant data.

In the next step 110, an adaption of the parameters is performed. In the adaption step, the parameters are complemented with additional information available from other sources, e.g. the satellite operator who knows better the shape and dimensions as well as position and velocity of his satellite. Further in the adaption step 110, an adaption of the parameters 40 is performed based on the system behavior quality 50 ascertained from the system behavior knowledge database 34.

In the final step 120, the collision probability 200 is estimated based on the adapted parameters 50 from the previous step 110.

A loop is added where in discrete time steps T the collision probability parameters 40 are adapted so that they follow the assumed behaviour of the space surveillance system 30. A collision probability value for the close approach event $T_{event}$ (TCA) is created at each discrete time step T. Thus, a collision probability trend (=risk prediction) is created showing what results future estimations are likely to be, based on the assumption of a routinely operating of the surveillance system, as captured in the behaviour parameters.

Working example

The space surveillance system has a set of catalogued objects, which can monitor and update the information using sensors and mathematical models. It registers a close approach (conjunction) between two objects 4 days in advance. It generates the conjunction parameters. They are updated every 12 - 24 hours. The risk estimation is updated accordingly. The parameters may include diameter, position and velocity estimates of the objects, as well as their uncertainties in the form of covariance matrices. The position uncertainty will be very large in the beginning (4 days to the event) and will shrink with every measurement update the awareness system is able to perform. The position uncertainty is a vital part of the risk estimation algorithm. The decrease of the position uncertainty within these 4 days happens figuratively from large to small, which has an impact on the risk estimation, as shown in the risk estimation equation, where the combined covariance matrix is applied, together with the miss distance, based on properties of space object 11 and space object 12

$$P_c = \frac{1}{\sqrt{(2\pi)^3 \det(C)}} \iiint e^{-\frac{1}{2}\Delta \vec{r}^T C^{-1} \Delta \vec{r}} dV$$

The development of the risk using the classic estimation approach over time is depicted in the following table.

| Forecast Time to $T_{event}$ | Risk $P_c$=f (Obj$_{11}$, Obj$_{12}$) | Position Uncertainty (m) |
| --- | --- | --- |
| Day 4 | 1:100.000 | Large (14.000) |
| Day 3 | 1:70.000 | Very big (6000) |
| Day 2 | 1:50.000 | Big (2000) |
| Day 1 | 1:20.000 | Medium (500) |
| 12h | 1:5000 | Small (10) |

The risk Pc increases over time as the surveillance system performs its routinely tasks and updates the conjunction parameters. 12 hours before the event at $T_{event}$ the risk is the highest with a chance of 1 in 5000 of a collision.

Using the improved method incorporating the behaviour parameters, shows less variability and already forecasts that the risk will be far higher than initially anticipated (following table). The workings of the surveillance system are considered and the position uncertainties are adapted according to the behaviour learned in an abstraction learning process. The forecast is updated as new data is released from the awareness system. Using the position uncertainty as it is expected to be close to the event, leads to a more realistic estimation.

| Forecast Time to $T_{event}$ | Risk $P_c$=f (Obj$_{11}$, Obj$_{12}$) | Position Uncertainty (m) |
| --- | --- | --- |
| Day 4 | 1:7000 | Small (11) |
| Day 3 | 1:4000 | Small (9) |
| Day 2 | 1:5000 | Small (10) |
| Day 1 | 1:5000 | Small (10) |
| 12h | 1:5000 | Small (10) |

**Reference List**

10      space object

11      first space object

12      second space object

20      uncertainties

21      tangential uncertainty

22      along-track uncertainty

23      radial uncertainty

30      space surveillance system

31      space surveillance sensor system

32      computer

34      system behavior knowledge database

40      collision probability parameters

50      system behavior quality

100     first step/filter

110     second step/adapt

120     third step/estimate

200     collision probability

**Claims**

1.  Method for determining a collision probability (200) of at least two space objects (10) each detected by a space surveillance sensor system, the method comprising the steps of:

    - providing of values of collision probability parameters (40) of a first space object (11) detected by a first space surveillance sensor system and values of collision probability parameters (40) of a second space object (12) detected by a second space surveillance sensor system, whereby said collision probability parameters (40) are suitable to determine a collision probability (200) between said first space object (11) and said second space object (12),
    - providing a system behavior knowledge database (34), whereby the system behavior knowledge database (34) supplies for each space surveillance sensor system a system behavior quality (50) in relation to at least one object property of space objects (10);
    - ascertaining at least one object property of the detected first space object (11) and, for the first space surveillance sensor system, determine a system behavior quality (50) from the system behavior knowledge database (34) using the at least one ascertained object property of the detected first space object (11); and/or
    - ascertaining at least one object property of the detected second space object (12) and, for the second space surveillance sensor system, determine a system behavior quality (50) from the system behavior knowledge database (34) using the at least one ascertained object property of the detected second space object (12);
    - determining at least one collision probability (200) of the first space object (11) and the second space object (12) depending on the provided values of collision probability parameters (40) of the first space object (11), the provided values of collision probability parameters (40) of the second space object (12) and the determined system behavior quality (50) for the corresponding space surveillance sensor system.

2.  Method according to claim 1, wherein the system behavior quality (50) supplied by the system behavior knowledge (34) database is a set of at least one behavior parameter describing at minimum a qualitative trend in the detected collision probability parameters (40).

3.  Method according to claim 1 or 2, wherein the first space surveillance sensor systems and the second space surveillance sensor system are different space surveillance sensor systems or the same space surveillance sensor system.

4.  Method according to one of the claims 1 to 3, wherein a first collision probability (200) is determined in relation to a detecting time, on which the values of collision probability parameters (40) of the first and/or second space object (12) were detected, and at least one second collision probability (200) is determined in relation to a an intermediate time, which is between the detecting time and the time of closest approach of both space objects (10).

5.  Method according to claim 4, wherein for each expected further detecting time as an intermediate time, a second collision probability (200) is determined.

6.  Method according to one of the claims 1 to 5, wherein the system behavior knowledge database (34) is based on machine learning.

7.  Method according to one of the claims 1 to 6, wherein the system behavior knowledge database (34) is based on an artificial intelligence, especially based on an artificial neural network.

8.  Method according to one of the claims 1 to 7, wherein the collision probability parameters (40) are a space object (10) state vector of the corresponding space object (10), space object shape and dimensions of the corresponding space object (10) and/or space object (10) uncertainty (20) of the corresponding space object (10).

9. Method according to claim 8, wherein the space object state vector of the corresponding space object (10) includes at least one of the followings:

- position of the corresponding space object (10);
- velocity of the corresponding space object (10);
- ballistic coefficient of the corresponding space object (10);
- drag coefficient of the corresponding space object (10);
- drag coefficient over mass of the corresponding space object (10);
- reflectivity coefficient of the corresponding space object (10);
- reflectivity coefficient over mass of the corresponding space object (10).

10. Method according to claim 8 or 9, wherein the space object (10) shape and dimensions of the corresponding space object includes a reference diameter or reference radius of an assumed spherical body of the corresponding space object.

11. Method according to one of the claims 8 to 10, wherein the space object (10) uncertainty (20) of the corresponding space object is expressed as standard deviations or variances for at least one of the followings:

- position of the corresponding space object (10);
- velocity of the corresponding space object (10);
- ballistic coefficient of the corresponding space object (10);
- drag coefficient of the corresponding space object (10);
- drag coefficient over mass of the corresponding space object (10);
- reflectivity coefficient of the corresponding space object (10);
- reflectivity coefficient over mass of the corresponding space object (10).

12. Method according to one of the claims 1 to 12, wherein the system behavior quality (50) from the system behavior knowledge database (34) is based on at least one of the followings:

- achievable quality of detecting the space object (10) state vector of the corresponding space object (10) expressed as the covariance close to the time of closest approach;
- a revisit frequency of the corresponding space object (10) by the corresponding space surveillance sensor system (31);
- an orbit extrapolation capabilities of the corresponding space surveillance sensor system (31).

13. Computer program arranged to execute the method according to one of the claims 1 to 12, if the computer program is running on a computer machine.

14. Hardware device arranged to execute the method according to one of the claims 1 to 12.

Satellite 1

Satellite 2

**Figur 1**

**Figur 2**

**Figur 3**

30

31

100 ← 40 ← 

$T_{now} \dots T_{event}$

110 ← 50 ← 34

$T_n$

120

200

**Figur 4**

Europäisches
Patentamt

European
Patent Office

Office européen
des brevets

## EUROPEAN SEARCH REPORT

Application Number

EP 20 21 4225

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/050136 A1 (ALFANO SALVATORE [US] ET AL) 14 February 2019 (2019-02-14) * the whole document * | 1-14 | INV. G08G5/04 G08G5/00 G01S13/93 G01S13/933 |
| A,D | US 2007/032984 A1 (ALFANO SALVATORE [US]) 8 February 2007 (2007-02-08) * the whole document * | 1-14 | |

| | | | TECHNICAL FIELDS SEARCHED (IPC) |
|---|---|---|---|
| | | | G08G G01S |

The present search report has been drawn up for all claims

| Place of search | Date of completion of the search | Examiner |
|---|---|---|
| The Hague | 7 May 2021 | Vieira, Alexandre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 4225

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2021

| Patent document cited in search report | | Publication date | Patent family member(s) | Publication date |
|---|---|---|---|---|
| US 2019050136 | A1 | 14-02-2019 | NONE | |
| US 2007032984 | A1 | 08-02-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070032984 A1
- US 8909586 B2
- US 10551994 B
- EP 2937798 A1
- EP 3633528 A1

### Non-patent literature cited in the description

- A Parametric Analysis of Orbital Debris Collision Probability and Maneuver Rate for Space Vehicles. **FOSTER, J.L. ; ESTES, H.S.** NASA. NASA Johnson Space Flight Center, August 1992